# EUROPEAN PATENT SPECIFICATION

(11) **EP 3 696 872 B1**
(45) Date of publication and mention of the grant of the patent: **16.11.2022**
(21) Application number: 20153422.9
(22) Date of filing: 23.01.2020
(51) Int. Cl.: H01M 50/103, H01M 50/119, H01M 50/121, H01M 50/129, H01M 50/178, H01M 50/211, H01M 50/227, H01M 50/271, H01M 50/358, H01M 50/502, H01M 50/55, H01M 50/553, H01M 50/342, H01M 50/30

(54) **BATTERY PACK**
BATTERIEPACK
BLOC-BATTERIE

(30) Priority: 24.01.2019 JP 2019010109
(43) Date of publication of application: 19.08.2020
(73) Proprietor: TDK Corporation, Tokyo 103-6128 (JP)
(72) Inventor: MORITA, Hideyo, Tokyo, 103-6128 (JP)
(74) Representative: Epping - Hermann - Fischer

(56) References cited:
- KR-A- 20170 090 261
- US-A1- 2009 220 851
- US-A1- 2017 331 089
- US-A1- 2018 233 790

## Description

### BACKGROUND OF THE INVENTION

### --Field of the Invention

The present invention relates to a battery pack and, more particularly, to a battery pack capable of controlling the flow of a high-temperature gas generated from an electrolytic solution when a thin cell such as a lithium-ion battery undergoes abnormal heat generation.

### --Description of Related Art

With a recent increase in environmental awareness, an ESS (Energy Storage System) capable of achieving peak-cut of power consumption and capable of being also as a backup in the event of a power cut has drawn attention. The ESS is constituted by a battery pack having a structure in which a plurality of thin cells such as lithium-ion batteries are connected in series or in parallel.

The lithium-ion battery described in JP 2007-265725A has an outer case housing a thin cell and a gas valve provided in the outer case. When the inner pressure of the thin cell increases to a predetermined value or more, the gas valve automatically opens to lower the inner pressure. US 2018/233790 A1 shows a battery pack that includes a relatively small number of parts, that is light, and that is able to cool a plurality of cartridges using air, and that can be made in a compact form factor. KR 2017 0090261 A shows a secondary battery pack case capable of preventing flame from spreading to the outside of a secondary battery pack when the secondary battery cell ignites. US 2009/220851 A1 discloses a battery pack with a battery cell housing for housing lithium cells and a gas processor for liquefying the internal gases generated from the lithium cells. In US 2017/331089 A shows a power source device including pouch cells each having a laminated film outer casing, and a housing member enclosing the pouch cells. Each of the pouch cells includes a thermally welded portion formed by thermally welding the laminated film and a gas discharge portion provided in at least a part of the thermally welded portion. The housing member includes an exhaust port that communicates with the gas discharge portion of the one or plurality of pouch cells.

The recent cases have shown that there is a possibility of abnormal heat generation in the lithium-ion battery. When the lithium-ion battery undergoes abnormal heat generation, a large amount of high-temperature gas is generated from an electrolytic solution included in the thin cell and ejected from the gas valve or from the peeled portion of a laminate film. When the ejected high-temperature gas is directly sprayed onto another thin cell, the cell may undergo abnormal heat generation, which may cause propagation of abnormal heat generation.

### SUMMARY

It is therefore an object of the present invention to provide a battery pack capable of controlling, even when a large amount of gas is generated from an electrolytic solution due to abnormal heat generation in a thin cell, the flow of the generated gas.

A battery pack according to the present invention includes: a thin cell having a laminated body including positive and negative electrodes facing each other through a separator, a laminate film housing the laminated body and an electrolytic solution, and first and second terminal electrodes protruding from the laminate film and connected respectively to the positive electrode and the negative electrode; and a cell housing body housing the thin cell and having a bus bar connected to the first and second terminal electrodes. The cell housing body has a first gas hole for releasing a gas generated from the electrolytic solution outside the cell housing body.

According to the present invention, the first gas hole is formed in the cell housing body, so that even if a certain thin cell undergoes abnormal heat generation to cause a large amount of high-temperature gas is generated from the electrolytic solution, the gas flows along the first gas hole. As a result, the flow of the gas can be controlled, thus preventing propagation of the abnormal heat generation to another thin cell.

The battery pack according to the present invention may further include a cover member fixed to the cell housing body and forming a gas diffusion space communicating with the first gas hole. Thus, a high-temperature gas ejected from the thin cell is cooled to some extent in the gas diffusion space, so that it is possible to reduce a risk of propagation of the abnormal heat generation.

In the present invention, the cell housing body may have a plurality of housings each housing the thin cell, the first gas hole may be provided for each one or more thin cells, and the gas diffusion space may communicate with all the first gas holes provided for each or two thin cells. With this configuration, it is possible to sufficiently ensure the volume of the gas diffusion space, allowing a high-temperature gas to be cooled efficiently. In this case, the volume of the gas diffusion space is preferably larger than the volume of one thin cell.

In the present invention, the cover member may have a second gas hole for externally releasing a gas filled in the gas diffusion space. With this configuration, it is possible to externally release a gas that has been cooled to some extent in the gas diffusion space. In this case, the second gas hole may be provided at a position not facing the first gas hole. This allows a high-temperature gas to be externally released after being cooled to some extent.

In the present invention, the second hole may be closed by a closing member which is opened when a gas is generated. This allows air tightness in a normal operating condition to be enhanced. In this case, the closing member may be a tubular resin film wrapping the thin cell, cell housing body, and cover member. With this configuration, when the thin cell undergoes abnormal heat generation, the resin film covering the second gas hole is naturally broken due to the heat of the gas, eliminating the need to use a gas valve or the like.

According to the present invention, even when a certain thin cell undergoes abnormal heat generation to generate a large amount of high-temperature gas from an electrolytic solution, the flow of the gas is controlled, thereby preventing propagation of the abnormal heat generation to another thin cell.

### BRIEF DESCRIPTION OF THE DRAWINGS

The above features and advantages of the present invention will be more apparent from the following description of certain preferred embodiments taken in conjunction with the accompanying drawings, in which:
FIG. 1 is a perspective view illustrating the outer appearance of an ESS 10;
FIG. 2 is an exploded perspective view for explaining the structure of each battery pack 20;
FIG. 3 is an exploded perspective view of the structural body S;
FIGs. 4A and 4B are views for explaining the configurations of the structural body Sa, where FIG. 4A is a perspective view, and FIG. 4B is an exploded perspective view.
FIG. 5 is a schematic perspective view illustrating the outer appearance of the thin cell 2;
FIG. 6 is a schematic exploded perspective view of the thin cell 2;
FIG. 7 is a schematic cross-sectional view taken along line A-A in FIG. 6;
FIG. 8 is a xz cross-sectional view illustrating a gas diffusion space SP formed by the cover member 25;
FIG. 9 is a yz cross-sectional view illustrating a gas diffusion space SP formed by the cover member 25;
FIG. 10 is an xy plan view for explaining the positional relationship between the first and second gas holes 23b and 25a;
FIGs. 11A to 11C, 12A to 12C, 13A to 13C, and 14A to 14C are process views for explaining the manufacturing method for the battery pack 20;
FIG. 15 is a view illustrating the electrical connection between the thin cells 2 in the battery pack 20; and
FIG. 16 is a schematic diagram of an example in which another first gas holes 23b are formed at a part covering the side surfaces of the thin cells 2.

### DETAILED DESCRIPTION OF THE EMBODIMENTS

Preferred embodiments of the present invention will be explained below in detail with reference to the accompanying drawings.

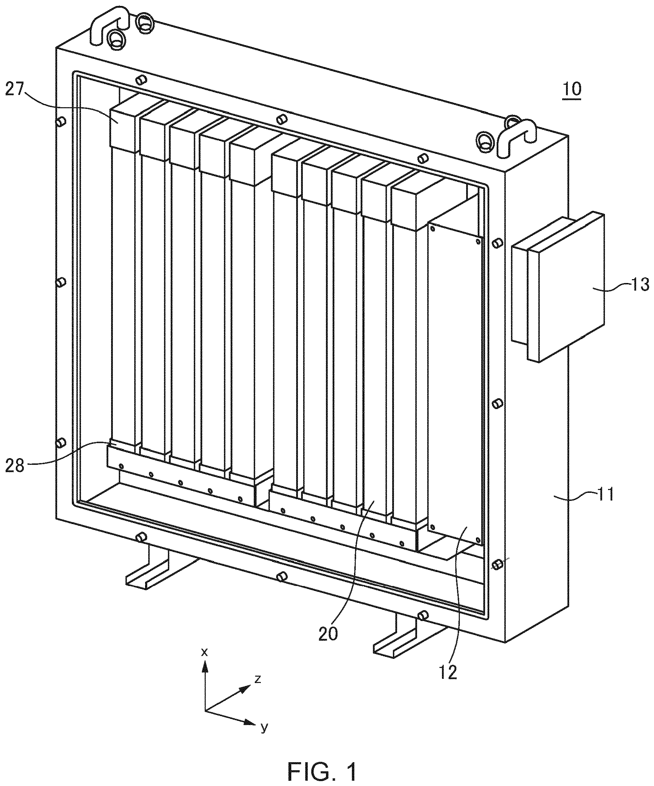

FIG. 1 is a perspective view illustrating the outer appearance of an ESS 10 provided with battery packs 20 according to a preferred embodiment of the present invention.

The ESS 10 illustrated in FIG. 1 has a structure in which ten battery packs 20 each having a rectangular parallelepiped shape are arranged in the y-direction inside a casing 11 having a rectangular tubular shape. Although details will be described later, 28 thin cells such as lithium-ion batteries are housed in each battery pack 20, and by connecting the 28 thin cells in series or in parallel, one battery pack 20 is constituted. A terminal cover 27 is provided at one end of the battery pack 20 in the x-direction, and a back cover 28 is provided at the other end of the battery pack 20 in the x-direction.

Each battery pack 20 is connected to a battery management system 12 for control disposed on one end side in the y-direction of a space in the casing 11 through a not-shown wiring. The battery management system 12 includes a control circuit for controlling each battery pack 20 and performs charge/discharge control for each battery pack 20. A wiring board 13 is disposed on the side surface of the casing 11. The wiring board 13 includes a breaker and various terminals and is connected to the battery management system 12. The battery management system 12 is connected to a device (e.g., various electrical devices installed in a house) to be supplied with power and is connected also to an external computer (not illustrated) through the various terminals in the wiring board 13. The external computer plays a role of executing status monitoring and control of each battery pack 20 through the battery management system 12.

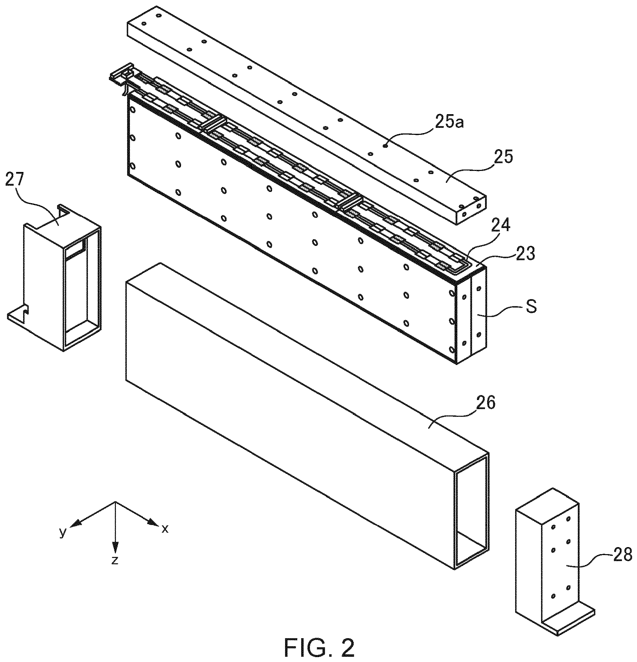

FIG. 2 is an exploded perspective view for explaining the structure of each battery pack 20.

As illustrated in FIG. 2, the battery pack 20 has a structural body S, a printed board 23 attached to one xy plane surface of the structural body S, a cover member 25 covering the printed board 23, a tubular resin film 26 wrapping the above members, a terminal cover 27 attached to one of the yz plane surfaces of the structural body S and cover member 25, and a back cover 28 attached to the other one of the yz plane surfaces of the structural body S and cover member 25. The structural body S houses therein 28 thin cells, and the terminal electrode of each thin cell is connected to a bus bar 24 provided on the printed board 23.

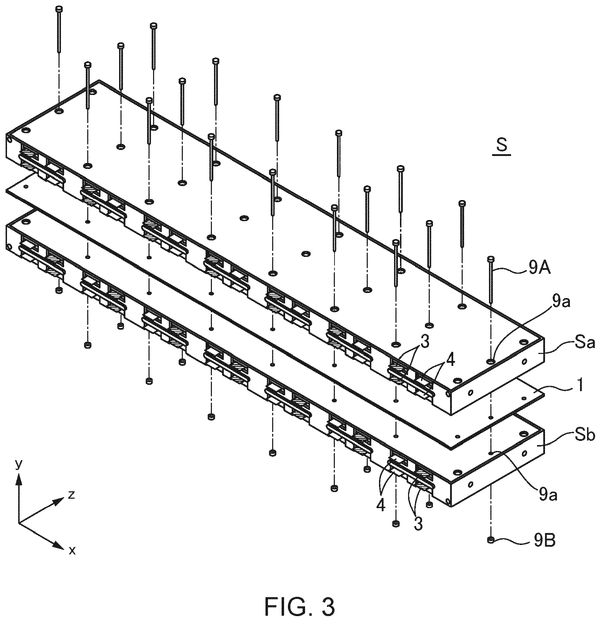

FIG. 3 is an exploded perspective view of the structural body S.

As illustrated in FIG. 3, the structural body S is constituted of two structural bodies Sa and Sb and a heat insulating member 1 sandwiched between the structural bodies Sa and Sb. The structural bodies Sa and Sb each include 14 thin cells. The structural bodies Sa and Sb are fixed to each other by bolts 9A and nuts 9B with the heat insulating member 1 sandwiched therebetween, whereby the structural body S having a rectangular parallelepiped shape as a whole is formed. Reference numerals 3 and 4 in FIG. 3 denote terminal electrodes of each thin cell that protrude from the xy plane surface of the structural body S.

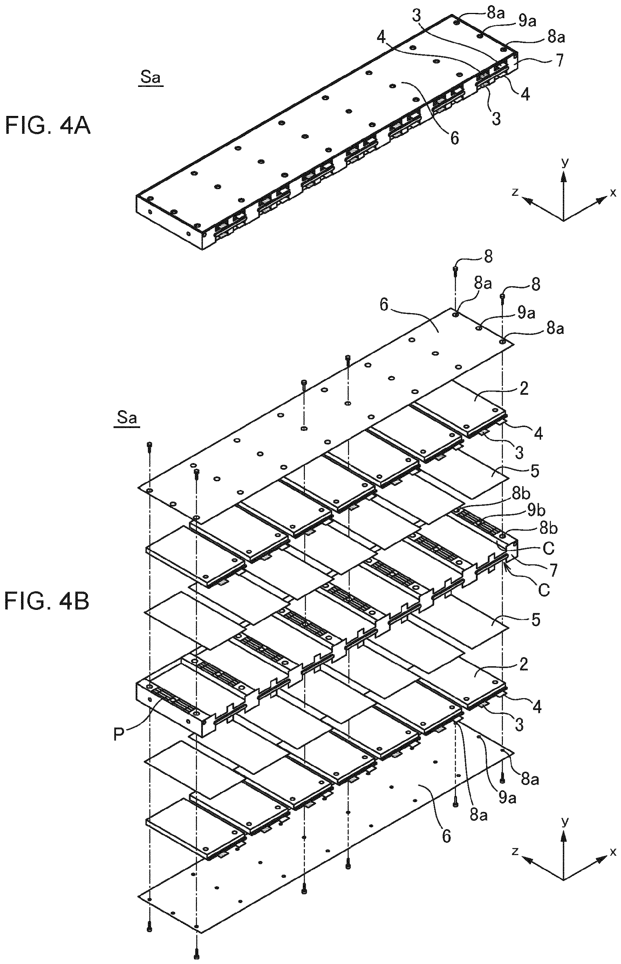

FIGs. 4A and 4B are views for explaining the configurations of the structural body Sa. FIG. 4A is a perspective view, and FIG. 4B is an exploded perspective view. The structural bodies Sa and Sb have the same configuration, so overlapping description will be omitted.

As illustrated in FIGs. 4A and 4B, the structural body Sa has a resin holder 7 having seven housings C on each of the front and back thereof, a plurality of thin cells 2 housed in the respective housings C, and a heat conducting member 6. The heat conducting member 6 is a plate-like member and is constituted by a material having a high heat conductivity. Specifically, the heat conducting member 6 is preferably constituted by an aluminum plate.

The resin holder 7 is a rectangular parallelepiped member formed by, e.g., a plastic having a heat insulating property. Although it is not essential that the resin holder 7 has a heat insulating property, it preferably has a heat insulating property. Seven housings C are formed on each of the front and back of the resin holder 7. The housings C each have a recessed shape in which the thin cell 2 can be housed.

In each housing C, a heat insulating member 5 and the thin cell 2 are disposed in this order from the bottom surface side of the housing C. The heat insulating member 5 is a heat insulating sheet formed into a shape substantially the same as the xz plane shape of the thin cell 2 and is constituted by, e.g., a foamed plastic. As described later, the depth of each housing C is set to a value slightly smaller than the sum of the heights of the heat insulating member 5 and thin cell 2 so as to cause a predetermined pressure to be applied to the thin cell 2 when the heat conducting member 6 is screw-fixed to the resin holder 7. The heat insulating member 5, which is a foamed plastic, is deformed by absorbing the pressure, allowing the thin cell 2 to tightly adhere to both the heat conducting member 6 and heat insulating member 5.

The resin holder 7 has a porous space P between the housings C adjacent in the x-direction. The porous space P is formed by partitioning, using partition plates, a cavity provided between holes 8b and 9b (to be described later) formed in an area between the seven housings C adjacent in the x-direction. The porous space P can be formed into various shapes such as the shape of Chinese character " 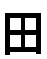 " or " 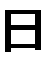 " as viewed in the y-direction. The partition plates may be formed integrally with the resin holder 7 by being previously incorporated into a die for forming the resin holder 7 or may be inserted into the space after formation of the resin holder 7.

When the heat conductivity of the resin holder 7 is higher than that of air, the cavity is preferably formed in the area between the seven housings C adjacent in the x-direction in order to suppress heat conduction in the x-direction. However, when one large cavity is formed, air convection may occur inside the cavity, so that heat conduction between the thin cells 2 adjacent in the x-direction is enhanced rather than suppressed. Thus, by partitioning the cavity to form the porous space P, such air convection is prevented from occurring, so that it is possible to suppress heat conduction between the thin cells 2 adjacent in the x-direction.

The heat conducting member 6 is screw-fixed to the resin holder 7 using tapping screws 8, thereby forming the structural body Sa having a structure in which each of the plurality of thin cells 2 is sandwiched between the heat insulating member 5 and the heat conducting member 6. When the heat conducting member 6 is screw-fixed to the resin holder 7, the thin cell 2 is sandwiched between the resin holder 7 and the heat conducting member 6. The structural body Sa having such a structure and the structural body Sb having the same structure as the structural body Sa are fixed to each other by the bolts 9A and nuts 9B with the heat insulating member 1 sandwiched therebetween as illustrated in FIG. 2, whereby the structural body S having a rectangular parallelepiped shape as a whole is formed.

Then, as illustrated in FIG. 2, the printed board 23 is attached to the structural body S. As a result, the periphery of the thin cell 2 is covered with the resin holder 7, heat conducting member 6 and printed board 23. Thus, the resin holder 7, heat conducting member 6 and printed board 23 constitute a "cell housing body" housing the thin cells 2. However, the "cell housing body" constituted by the resin holder 7, heat conducting member 6 and printed board 23 is not sealed, but, as described later, communicates with the outside of the structural body S through first gas holes formed in the printed board 23.

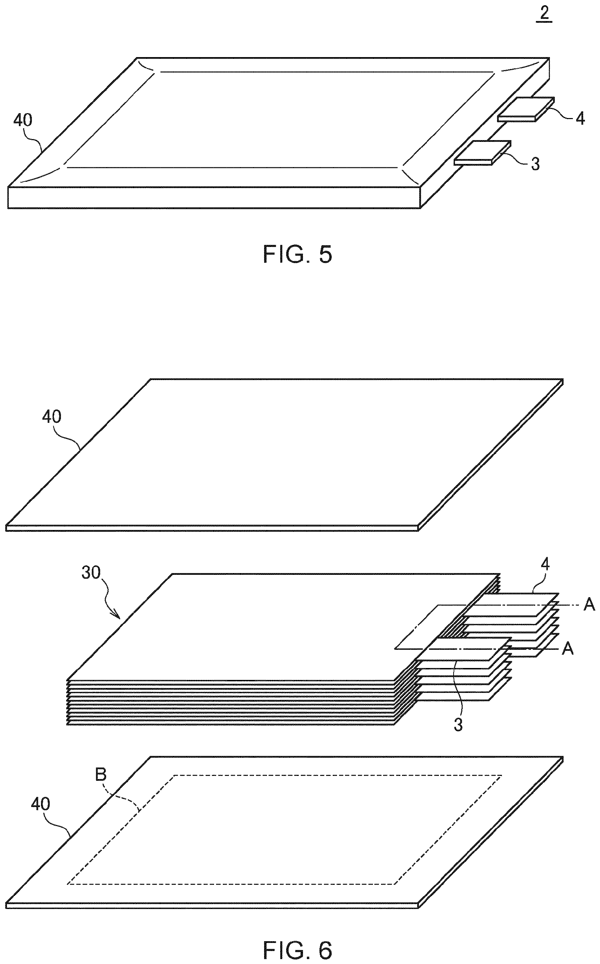

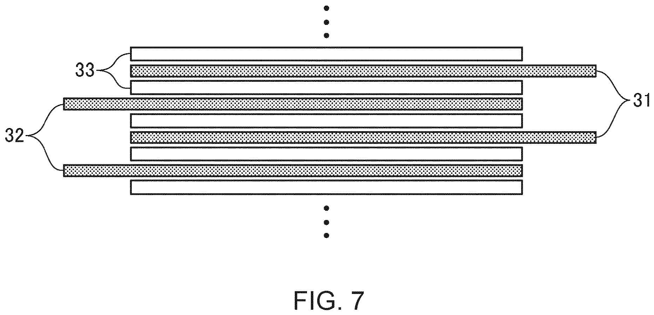

FIG. 5 is a schematic perspective view illustrating the outer appearance of the thin cell 2. FIG. 6 is a schematic exploded perspective view of the thin cell 2. FIG. 7 is a schematic cross-sectional view taken along line A-A in FIG. 6.

The thin cell 2 employed in the present embodiment is a lithium-ion battery and has a laminated body 30 and a bag-like laminate film 40 housing the laminated body 30 together with a not-shown electrolytic solution. The first and second terminal electrodes 3 and 4 are led out from the laminate film 40. The laminated body 30 has a structure in which a plurality of positive electrodes 31 and a plurality of negative electrodes 32 are laminated through separators 33. The separators 33 are insulating films each having minute holes that transmit lithium ion contained in the electrolytic solution.

The positive electrode 31 has a structure in which a positive electrode active material is formed on the surface of a positive electrode collector, and a part of the positive electrode collector is lead out from the laminate film 40 to constitute the first terminal electrode 3. The first terminal electrode 3 may be a separate metallic body connected to the positive electrode collector. The positive electrode collector is made of, e.g., aluminum (Al), and the positive electrode active material is made of a material, such as LiCoO₂, LiNiO₂, or LiMnO₂, that can store or release lithium ion.

The negative electrode 32 has a structure in which a negative active material is formed on the surface of a negative electrode collector, and a part of the negative electrode collector is lead out from the laminate film 40 to constitute the second terminal electrode 4. The second terminal electrode 4 may be a separate metallic body connected to the negative electrode collector. The negative electrode collector is made of, e.g., copper (Cu), and the negative electrode active material is made of, e.g., activated carbon.

The laminated body 30 having such a structure is housed in the bag-like laminate film 40 together with an electrolytic solution. The laminate film 40 has a structure in which an insulating film is laminated on both surfaces of a metal film and is processed into a bag-like shape to enclose the laminated body 30 and electrolytic solution in a sealed manner. The laminate film may be processed into a bag-like shape by folding a single laminate film 40 in two and then heating the overlapping three sides to bond the end portions of the upper insulating film and the end portions of the lower insulating film, or by overlapping two laminate films 40 and then heating the four sides to bond the end portions of the upper insulating film and the end portions of the lower insulating film.

A reference numeral B in FIG. 6 denotes an area overlapping the laminated body 30, and by heating the three sides or four sides outside the area, the upper and lower insulating films are bonded to each other, whereby the laminate film 40 sealed in a bag-like form is obtained.

In general, the lithium ion battery may be ignited when the main body temperature reaches 150°C. If the temperature of a certain thin cell 2 reaches 150°C to be ignited, a high-temperature gas is generated from the electrolytic solution, causing the bonded portion of the laminate film 40 to peel off, and the gas is ejected therefrom. At this time, the temperature of the gas reaches near 60°C. The gas ejected from the thin cell 2 is discharged from the housing C through the gas holes formed in the printed board 23 and is filled in a gas diffusion space formed by the cover member 25.

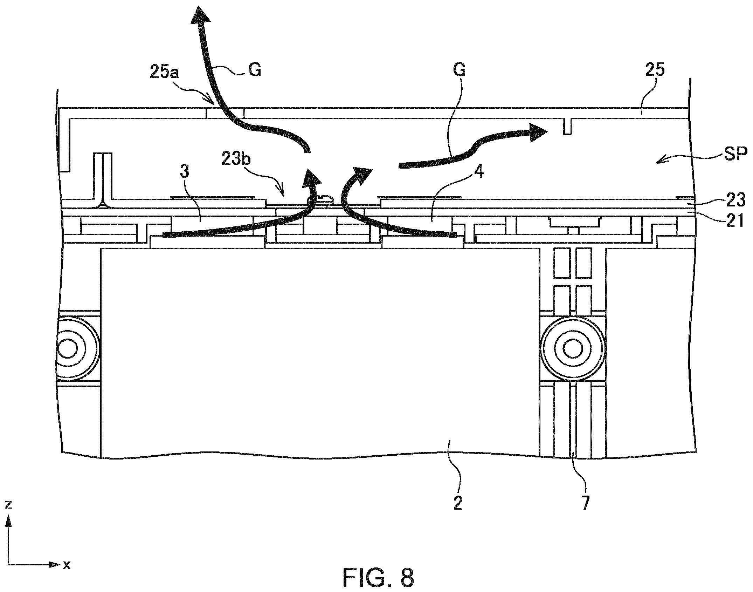

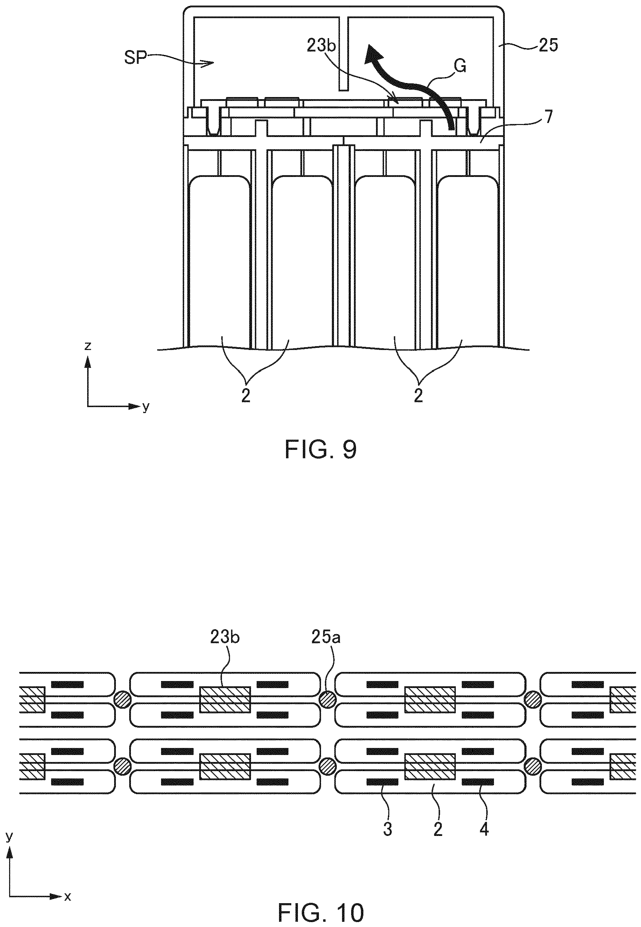

FIGs. 8 and 9 are views illustrating a gas diffusion space SP formed by the cover member 25. FIG. 8 illustrates the xz cross section, and FIG. 9 illustrates the yz cross section.

As illustrated in FIGs. 8 and 9, when the cover member 25 is attached so as to cover the printed board 23, the gas diffusion space SP is formed by the cover member 25. In the printed board 23, one gas hole 23b is formed for each two thin cells 2 adjacent in the y-direction, and the housings C communicate with the gas diffusion space SP in common through the first gas hole 23b. That is, one structural body S has 14 first gas holes 23b, and the 14 first gas holes 23b communicate with the gas diffusion space SP in common.

Thus, when a certain thin cell 2 undergoes abnormal heat generation to cause a high-temperature gas G to be ejected, the gas G does not stay in the housing C but flows out to the gas diffusion space SP through the first gas hole 23b. The gas diffusion space SP is a comparatively large volumetric space provided in common for the 28 thin cells, so that the gas G having reached the gas diffusion space SP is cooled down to some extent. Thus, another normal thin cell 2 does not undergo abnormal heat generation by the gas flowing therein through another gas hole 23b. The volume of the gas diffusion space SP is preferably larger than the volume of one thin cell 2 and, more preferably, 1/100 or more of the volume of a gas that can be generated when one thin cell 2 undergoes abnormal heat generation. With such a volume of the gas diffusion space SP, even when one thin cell 2 undergoes abnormal heat generation, it is possible to reliably prevent propagation of the abnormal heat generation to another thin cell 2. Further, in the present embodiment, one gas hole 23b is provided for each two thin cells, so that the diameter of the gas hole 23b can be designed sufficiently large.

Further, a plurality of second gas holes 25a are formed in the upper surface of the cover member 25. Thus, the gas G filled in the gas diffusion space SP is released outside the battery pack 20 through the second gas holes 25a.

FIG. 10 is an xy plan view for explaining the positional relationship between the first and second gas holes 23b and 25a.

As illustrated in FIG. 10, the first gas hole 23b is disposed immediately above its corresponding two thin cells 2 as viewed in the z-direction and, thus, the gas G ejected from the thin cell 2 is guided to the gas diffusion space SP immediately. On the other hand, the second gas hole 25a is disposed at a location not overlapping the first gas hole 23b as viewed in the z-direction. That is, the second gas hole 25a is disposed at a location not facing the first gas hole 23b. With this configuration, the gas G that has reached the gas diffusion space SP through the first gas hole 23b does not flow into the second gas hole 25a immediately but flows inside the gas diffusion space SP to some extent in the x-direction and is then released outside through the second gas hole 25a. Thus, from the second gas hole 25a, the gas G that has been cooled down to some extent in the gas diffusion space SP is released.

However, in a normal operating condition, the second gas hole 25a is closed by the resin film 26 illustrated in FIG. 2. Thus, in the normal operating condition, moisture in the atmosphere and the like cannot intrude inside the battery pack 20 through the second gas hole 25a. When a certain thin cell 2 undergoes abnormal heat generation to cause the high-temperature gas G to be ejected, a part of the resin film 26 that covers the second gas hole 25a is broken by the heat of the gas G, thereby opening the second gas hole 25a.

As described above, in the battery pack 20 according to the preset embodiment, the thin cells 2 are housed in the cell housing body constituted by the resin holder 7, heat conducting member 6 and printed board 23, and the first gas holes 23b are formed in the printed board 23. Thus, even when a certain thin cell 2 undergoes abnormal heat generation, it is possible to guide a high-temperature gas ejected from the thin cell 2 in a predetermined direction. This can prevent propagation of the abnormal heat generation to another thin cell 2. Further, the printed board 23 is attached with the cover member 25 that forms the gas diffusion space SP, allowing the high-temperature gas to be cooled down to some extent in the gas diffusion space SP. The gas in the gas diffusion space SP is released outside the battery pack 20 through the second gas holes 25a formed in the cover member 25.

The following describes a manufacturing method for the battery pack 20.

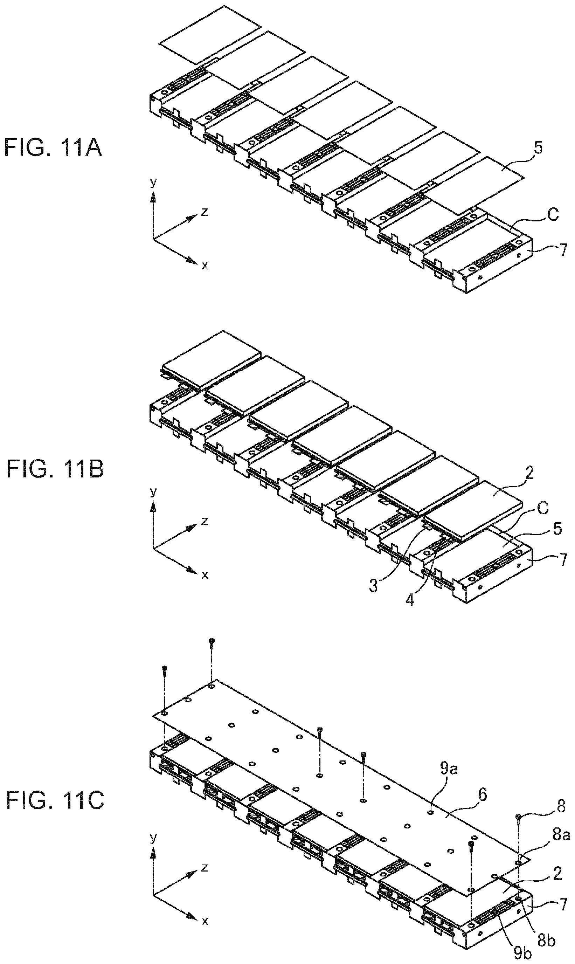

FIGs. 11A to 11C, 12A to 12C, 13A to 13C, and 14A to 14C are process views for explaining the manufacturing method for the battery pack 20.

First, as illustrated in FIG. 11A, the heat insulating members 5 are disposed in their corresponding housings C formed on one surface of the resin holder 7 formed using a die. Subsequently, as illustrated in FIG. 11B, the thin cells 2 are disposed on their corresponding heat insulating members 5. As illustrated, each housing C has cuts for exposing therethrough the terminal electrodes 3 and 4 of each thin cell 2, and the thin cells 2 are disposed in the respective housings C such that the terminal electrodes 3 and 4 of all the thin cells 2 are exposed from the cuts in the same direction. Thereafter, as illustrated in FIG. 11C, the plate-like heat conducting member 6 is disposed so as to cover the upper surfaces of the respective thin cells 2 and fixed to the resin holder 7 using six tapping screws 8.

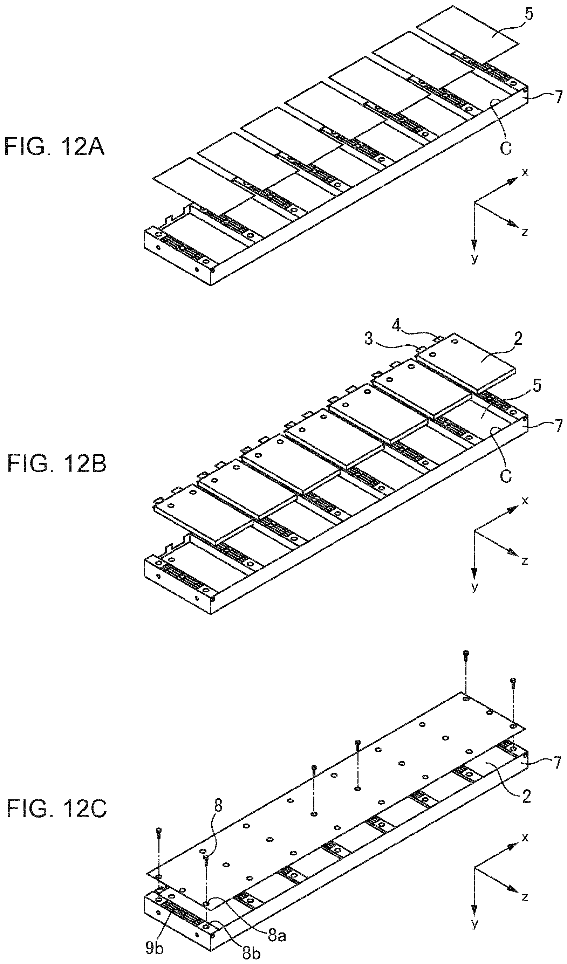

Then, the above-described processes are repeated with the resin holder 7 turned upside down. That is, as illustrated in FIG. 12A, the heat insulating members 5 are disposed in their corresponding housings C formed on the other surface of the resin holder 7. Subsequently, as illustrated in FIG. 12B, the thin cells 2 are disposed on their corresponding heat insulating members 5. At this time, the thin cells are disposed such that the terminal electrodes 3 of the thin cells 2 on the front and back sides overlap each other and that the terminal electrodes 4 of the thin cells 2 on the front and back sides overlap each other. Thereafter, as illustrated in FIG. 12C, the plate-like heat conducting member 6 is disposed so as to cover the upper surfaces of the respective thin cells 2 and fixed to the resin holder 7 using six tapping screws 8.

By the processes thus far, the structural body Sa illustrated in FIG. 4A is completed. After the structural body Sb is formed in the same manner, the structural body Sb, heat insulating member 1 and structural body Sa are stacked in this order, and 18 sets of the bolts 9A and nuts 9B are used to fix them. At this time, the structural bodies Sa and Sb are adjusted in direction such that the terminal electrode 3 of each thin cell 2 in the structural body Sa and the terminal electrode 4 of each thin cell 2 in the structural body Sb overlap each other in the y-direction. Thus, the structural body S illustrated in FIG. 3 is completed.

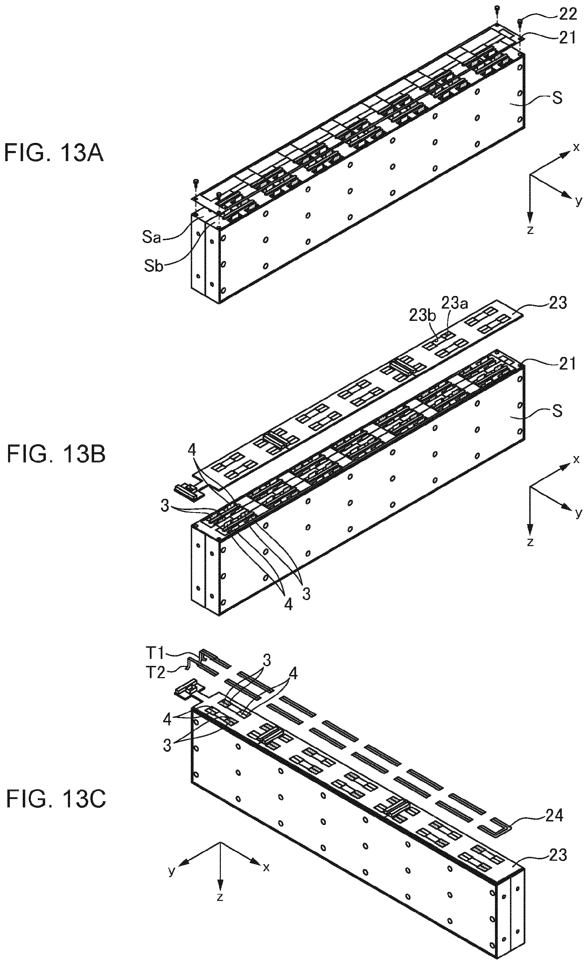

After completion of the structural body S, a PCB (Printed Circuit Board) holder 21 is fixed to the terminal surface (the surface of each thin cell 2 from which the terminal electrodes 3 and 4 are exposed) of the structural body S using tapping screws 22 as illustrated in FIG. 13A, and then the printed board 23 is attached to the PCB holder 21 as illustrated in FIG. 13B. The printed board 23 has formed therein electrode holes 23a for exposing the terminal electrodes 3 and 4 of the thin cell 2 and gas holes 23b for discharging a gas or smoke generated due to abnormal heat generation. As illustrated in FIG. 13B, the gas holes 23b are each disposed between the electrode holes 23a for exposing, respectively, the terminal electrodes 3 and 4 of each thin cell 2.

Then, as illustrated in FIG. 13C, the bus bar 24 is soldered onto the printed board 23. The bus bar 24 is electrically connect each thin cell 2 to terminals T1 and T2 of the battery pack 20.

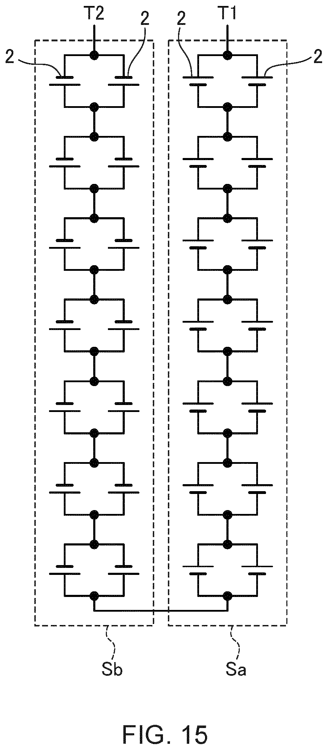

Here, electrical connection between the thin cells 2 in the battery pack 20 will be described. FIG. 15 is a view illustrating the electrical connection between the thin cells 2 in the battery pack 20. As illustrated, in each of the structural bodies Sa and Sb, two thin cells 2 adjacent in the y-direction are connected in parallel, and batteries each constituted by the parallel-connected two thin cells 2 are connected in series. Then, a battery constituted by the structural body Sa and a battery constituted by the structural body Sb are connected in series between the terminals T1 and T2 of the battery pack 20.

The bus bar 24 realizing the above electrical connection has a simple configuration that connects the terminal electrodes 3 and 4 linearly as illustrated in FIG. 13C. This can be achieved by, as described above, configuring the structural bodies Sa and Sb such that the terminal electrodes 3 and 4 of all the thin cells 2 are exposed in the same direction and stacking the structural bodies Sa and Sb such that the terminal electrode 3 of each thin cell 2 in the structural body Sa and the terminal electrode 4 of each thin cell 2 in the structural body Sb overlap each other in the y-direction.

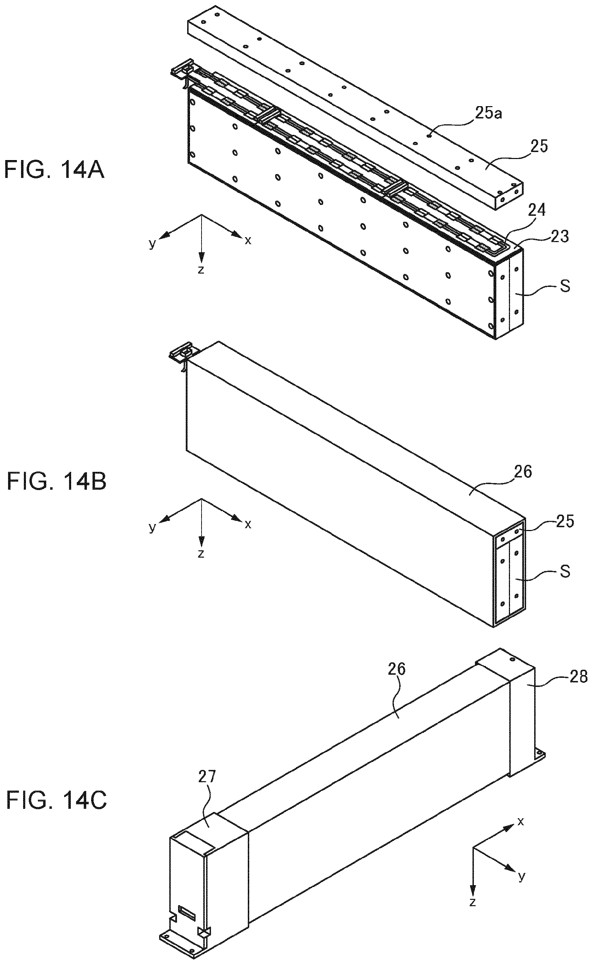

Then, as illustrated in FIG. 14A, the cover member 25 is disposed so as to cover the entire printed board 23 including the bus bar 24. At this time point, the cover member 25 need not be screw-fixed to the printed board 23. As described above, the cover member 25 has the gas holes 25a formed therein.

Then, as illustrated in FIG. 14B, the cover member 25 and structural body S are inserted into the tubular resin film 26, followed by application of heat treatment. As a result, the resin film 26 is contracted to fix the cover member 25 to the structural body S, and the side surfaces of the cover member 25 and structural body S are covered with the resin film 26. Further, the second gas holes 25a formed in the cover member 25 are closed by the resin film 26. The material of the resin film 26 is preferably, e.g., polyethylene terephthalate.

Finally, as illustrated in FIG. 14C, the terminal cover 27 is attached to the one ends of the cover member 25 and structural body S which are covered with the resin film 26, and the back cover 28 is attached to the other ends thereof. The terminal cover 27 has external terminals (not illustrated) of the battery pack 20 connected to the terminals T1 and T2 illustrated in FIG. 13C. The terminals T1 and T2 are connected to the battery management system 12 illustrated in FIG. 1 through the external terminals. By the processes thus far, the battery pack 20 illustrated in FIG. 1 is completed. A predetermined water-proof structure is preferably provided between the covers 27, 28 and the resin film 26.

It is apparent that the present invention is not limited to the above embodiments, but may be modified and changed without departing from the scope of the claims.

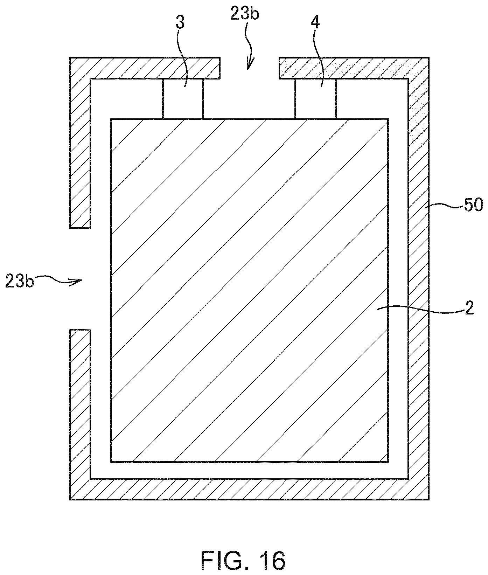

For example, in the above embodiment, the first gas holes 23b are disposed at a part of the cell housing body housing the thin cells 2 that covers the terminal electrodes 3 and 4; however, this point is not essential in the present invention. Thus, as in a modification illustrated in FIG. 16, the first gas holes 23b may be formed at a part of the cell housing body 50 that covers the side surfaces of the thin cells 2.

Further, in the above embodiment, the tubular resin film 26 is used to close the second gas holes 25a; alternatively, however, instead of using the resin film 26, other closing members, such as a gas valve, that open the second gas holes 25a when a gas is generated may be used to close the second gas holes 25a in a normal operating condition.

## Claims

1. A battery pack (20) comprising:
a thin cell (2) having a laminated body (30) including positive and negative electrodes (31), (32) facing each other through a separator, a laminate film housing the laminated body (30) and an electrolytic solution, and first and second terminal electrodes (3), (4) protruding from the laminate film and connected respectively to the positive electrode (31) and the negative electrode (32); and
a cell housing body housing the thin cell (2) and having a bus bar (24) connected to the first and second terminal electrodes (3), (4),
wherein the cell housing body includes:
a structural body (S) having a resin holder (7), the resin holder (7) having a housing (C) in which the thin cell (2) is housed; and
a printed board (23) attached to the structural body (S) so as to cover the thin cell,
wherein the bus bar (24) is formed on the printed board (23), and
wherein the printed board (23) has a pair of electrode holes (23a) into which the first
and second terminal electrodes (3), (4) of the thin cell (2) are inserted and a first gas hole (23b) for releasing a gas generated from the electrolytic solution to outside the cell housing body.

2. The battery pack (20) as claimed in claim 1, further comprising a cover member (25) fixed to the cell housing body such that the printed board (23) is covered with the cover member (25),
wherein the printed board (23) and the cover member form a gas diffusion space (SP) communicating with the first gas hole (23b)

3. The battery pack (20) as claimed in claim 2,
wherein the cell housing body has a plurality of housings (C) each housing the thin cell (2),
wherein the first gas hole (23b) is provided for each one or more thin cells (2), and
wherein the gas diffusion space communicates with all the first gas holes (23b) provided for each or two thin cells (2).

4. The battery pack (20) as claimed in claim 3, wherein a volume of the gas diffusion space is larger than a volume of one thin cell (2).

5. The battery pack (20) as claimed in any one of claims 2 to 4, wherein the cover member has a second gas hole (25a) for externally releasing the gas filled in the gas diffusion space.

6. The battery pack (20) as claimed in claim 5, wherein the second gas hole (25a) is provided at a position not facing the first gas hole (23b).

7. The battery pack (20) as claimed in claim 5 or 6, wherein the second hole is closed by a closing member which is opened when the gas is generated.

8. The battery pack (20) as claimed in claim 7, wherein the closing member is a tubular resin film (26) wrapping the thin cell (2), cell housing body, and cover member.

## Patentansprüche

1. Batteriepack (20), aufweisend:
eine Dünn-Zelle (2) mit einem laminierten Körper (30) mit positiven und negativen Elektroden (31), (32), die sich durch einen Separator hindurch gegenüberstehen, eine Laminat-Schicht beherbergend den laminierten Körper (30) und eine elektrolytische Lösung, und erste und zweite Anschlusselektroden (3), (4), die aus der Laminat-Schicht herausragen und mit der positiven Elektrode (31) beziehungsweise der negativen Elektrode (32) verbunden sind; und
einen Zellengehäusekörper, der die Dünn-Zelle (2) beherbergt und einen Busbar (24) aufweist, der mit den ersten und zweiten Anschlusselektroden (3), (4) verbunden ist,
wobei der Zellengehäusekörper aufweist:
einen Strukturkörper (S) mit einem Harzhalter (7), wobei der Harzhalter (7) ein Gehäuse (C) aufweist, in dem die Dünn-Zelle (2) untergebracht ist; und
eine Leiterplatte (23), die so an dem Strukturkörper (S) befestigt ist, dass sie die Dünn-Zelle bedeckt,
wobei der Busbar (24) auf der Leiterplatte (23) ausgebildet ist, und
wobei die Leiterplatte (23) ein Paar von Elektrodenlöchern (23a), in die die erste und zweite Anschlusselektroden (3), (4) der Dünn-Zelle (2) eingesetzt sind, und ein erstes Gas-Loch (23b) zum Ablassen eines aus der Elektrolytlösung erzeugten Gases nach außenhalb des Zellengehäusekörpers, aufweist.

2. Batteriepack (20) nach Anspruch 1, weiterhin aufweisend
ein Abdeckungselement (25), das so am Zellengehäusekörper befestigt ist, dass die Leiterplatte (23) mit dem Abdeckelement (25) bedeckt ist,
wobei die Leiterplatte (23) und das Abdeckelement einen Gasdiffusionsraum (SP) bilden, der mit dem ersten Gas-Loch (23b) in Verbindung steht.

3. Batteriepack (20) nach Anspruch 2,
wobei der Zellengehäusekörper eine Mehrzahl von Gehäusen (C) aufweist, die jeweils die Dünn-Zelle (2) beherbergen,
wobei das erste Gas-Loch (23b) für jede einzelne oder mehrere Dünn-Zellen (2) vorgesehen ist,
und
wobei der Gasdiffusionsraum mit allen für jede oder zwei Dünn-Zellen (2) vorgesehenen ersten Gaslöchern (23b) in Verbindung steht.

4. Batteriepack (20) nach Anspruch 3, wobei ein Volumen des Gasdiffusionsraums größer als das Volumen einer Dünn-Zelle (2) ist.

5. Batteriepack (20) nach einem der Ansprüche 2 bis 4, wobei das Abdeckelement ein zweites Gas-Loch (25a) aufweist, durch das das in den Gasdiffusionsraum eingefüllte Gas nach außen entweichen kann.

6. Batteriepack (20) nach Anspruch 5, wobei das zweite Gas-Loch (25a) ist an einer Stelle vorgesehen, die dem ersten Gas-Loch (23b) nicht gegenüberliegt.

7. Batteriepack (20) nach Anspruch 5 oder 6, wobei das zweite Loch durch ein Verschlusselement verschlossen ist, das geöffnet wird, wenn das Gas erzeugt wird.

8. Batteriepack (20) nach Anspruch 7, wobei das Verschlusselement eine schlauchförmige Harzschicht (26) ist, die die Dünn-Zelle (2), den Zellengehäusekörper und das Abdeckelement umhüllt.

## Revendications

1. Bloc-batterie (20) comprenant :
une cellule mince (2) ayant un corps stratifié (30) comprenant des électrodes positive et négative (31), (32) se faisant face à travers un séparateur, un film stratifié logeant le corps stratifié (30) et une solution électrolytique, et des première et seconde électrodes terminales (3), (4) faisant saillie à partir du film stratifié et connectées respectivement à l'électrode positive (31) et à l'électrode négative (32) ; et
un corps de logement de cellule logeant la cellule mince (2) et ayant une barre omnibus (24) connectée aux première et seconde électrodes terminales (3), (4),
dans lequel le corps de logement de cellule comprend :
un corps structurel (S) ayant un support en résine (7), le support en résine (7) ayant un logement (C) dans lequel est logée la cellule mince (2) ; et
une carte imprimée (23) fixée au corps structurel (S) de façon à couvrir la cellule mince,
dans lequel la barre omnibus (24) est formée sur la carte imprimée (23), et
dans lequel la carte imprimée (23) comporte une paire de trous d'électrode (23a) dans lesquels sont insérées les première et seconde électrodes terminales (3), (4) de la cellule mince (2) et un premier trou de gaz (23b) pour libérer un gaz généré à partir de la solution électrolytique vers l'extérieur du corps de logement de cellule.

2. Bloc-batterie (20) selon la revendication 1, comprenant en outre un élément de recouvrement (25) fixé au corps de logement de cellule de telle sorte que la carte imprimée (23) soit couverte avec l'élément de recouvrement (25),
dans lequel la carte imprimée (23) et l'élément de recouvrement forment un espace de diffusion de gaz (SP) communiquant avec le premier trou de gaz (23b).

3. Bloc-batterie (20) selon la revendication 2,
dans lequel le corps de logement de cellule a une pluralité de logements (C) logeant chacun la cellule mince (2),
dans lequel le premier trou de gaz (23b) est prévu pour chaque une ou plusieurs cellules minces (2), et
dans lequel l'espace de diffusion de gaz communique avec tous les premiers trous de gaz (23b) prévus pour chaque ou deux cellules minces (2).

4. Bloc-batterie (20) selon la revendication 3, dans lequel un volume de l'espace de diffusion de gaz est plus grand qu'un volume d'une cellule mince (2).

5. Bloc-batterie (20) selon l'une quelconque des revendications 2 à 4, dans lequel l'élément de recouvrement comporte un second trou de gaz (25a) pour libérer extérieurement le gaz remplissant l'espace de diffusion de gaz.

6. Bloc-batterie (20) selon la revendication 5, dans lequel le second trou de gaz (25a) est prévu au niveau d'une position ne faisant pas face au premier trou de gaz (23b).

7. Bloc-batterie (20) selon la revendication 5 ou 6, dans lequel le second trou est fermé par un élément de fermeture qui est ouvert lorsque le gaz est généré.

8. Bloc-batterie (20) selon la revendication 7, dans lequel l'élément de fermeture est un film en résine tubulaire (26) enveloppant la cellule mince (2), le corps de logement de cellule et l'élément de recouvrement.
